# EUROPÄISCHE PATENTSCHRIFT

(11) **EP 3 999 295 B1**
(45) Veröffentlichungstag und Bekanntmachung des Hinweises auf die Patenterteilung: **28.08.2024**
(21) Anmeldenummer: 20749801.5
(22) Anmeldetag: 19.07.2020
(51) Int. Cl.: B29B 7/42, B29B 7/84, B29B 7/86, B29C 48/52, B29C 48/53, B29C 48/76, B29B 7/74

(54) **EXTRUDER ZUR VISKOSITÄTSERHÖHENDEN AUFBEREITUNG VON AUFSCHMELZBAREN POLYMEREN**
EXTRUDER FOR THE VISCOSITY-INCREASING PREPARATION OF MELTABLE POLYMERS
EXTRUDEUSE CONÇUE POUR PRÉPARER DES POLYMÈRES FUSIBLES DE MANIÈRE À ACCROÎTRE LEUR VISCOSITÉ

(30) Priorität: 18.07.2019 DE 102019119533
(43) Veröffentlichungstag der Anmeldung: 25.05.2022
(73) Patentinhaber: Gneuss GmbH, 32549 Bad Oeynhausen (DE)
(72) Erfinder: GNEUß, Stephan, 32547 Bad Oeynhausen (DE); GNEUß, Detlef, 6919 Carabietta (CH); GNEUß, Daniel, Charlotte, NC 28277 (US)
(74) Vertreter: Tarvenkorn, Oliver
(86) Internationale Anmeldenummer: PCT/DE2020/100630
(87) Internationale Veröffentlichungsnummer: WO 2021/008659

(56) Entgegenhaltungen:
- EP-A1- 0 588 008
- EP-B1- 1 434 680
- WO-A1-2020/108705
- CN-B- 103 770 312
- CN-U- 202 943 854
- DE-A1- 2 237 190
- US-A- 5 975 440

## Beschreibung

Die Erfindung betrifft einen Extruder zur viskositätserhöhenden Aufbereitung von aufschmelzbaren Polymeren mit den Merkmalen des Oberbegriffs des Anspruchs 1.

In der Kunststofftechnik werden Extruder zur Plastifizierung und zur Aufbereitung von Polymeren benutzt. Sofern das Ziel die bloße Plastifizierung ist, stehen viele Bauarten als Monorotor mit einer Extruderschnecke oder als Doppelrotor mit zwei Extruderschnecken zur Verfügung, wobei die besondere Geometrie der Extruderschnecken dazu führt, dass an einem Ende Kunststoff in Form fester Partikel eingezogen und dieser aufgeschmolzen und flüssig ausgestoßen wird. In vielen Anwendungsfällen wird auch eine Homogenisierung und Entgasung vorgenommen, um z. B. in den Feststoffen enthaltene Feuchtigkeit abzuführen. Nachteilig ist dabei oftmals, dass die starke Scherung im Extruder zur Reduzierung der Molekülkettenlängen im Polymer und damit zur Herabsetzung der Viskosität führt. Diese Effekte treten insbesondere bei hochviskosen Polymeren auf. Für bestimmte Anwendungsfälle darf die Viskosität während der Plastifizierung im Extruder jedoch nicht zu stark sinken, sofern für den Weiterverarbeitungsprozess eine bestimmte Viskosität des geschmolzenen Polymers erforderlich ist. Dies gilt beispielsweise für das Recycling von hydrolisierbaren Polykondensaten wie Polyester (PET) und dabei insbesondere im Zusammenhang mit anspruchsvollen Weiterverarbeitungsprozessen wie der Herstellung von textilen Kunststofffasern.

In der DE 22 37 190 A wird ein Extruder zur Verarbeitung von Gummimischungen beschrieben, der mit einer Extruderschnecke bestückt ist. Die Entgasung wird dadurch verbessert, dass im Bereich der Absaugung der Schneckendurchmesser erhöht ist, wobei die Gangtiefe des Extruderschneckenstegs gegenüber der Einzugs- und Austragszone beibehalten ist, um eine konstante Förderleistung zu gewährleisten. Eine Anwendung für andere Polymere als Gummi und zur gezielten Beeinflussung der Viskosität ist nicht angegeben.

Für die Plastifizierung und vor allem für die Aufbereitung von Polymeren mit gleichzeitiger Erhöhung der Viskosität ist aus der EP 1 434 680 B1 ein Extruder mit einem Multi-Rotationssystem bekannt. Dieser sogenannten MRS-Extruder weist eine Extruderschnecke mit einem Mehrschneckenextruderteil auf, bei dem mehrere angetriebene Planetenschnecken um die Hauptschnecke herum angeordnet sind. Diese rotieren mit der Extruderschnecke als Einheit und rotieren dabei zugleich um ihre eigene Achse. In dem Mehrschneckenextruderteil kommt es zu einer starken Durchmischung und Vergrößerung der Oberfläche, so dass eine in diesem Bereich am Extrudergehäuse angeordnete Gasabsaugung besonders effektiv ist. Aufgrund der effizienten Absaugung eines Großteils der im Polymer enthaltenen Feuchtigkeit kann bei Polykondensaten eine deutliche Kettenverlängerung und damit eine Erhöhung der intrinsischen Viskosität erreicht werden. Da zugleich Fremdstoffe abgeschieden werden, eignet sich ein MRS-Extruder insbesondere für das Recycling von PET und ermöglicht, im Durchlaufbetrieb direkt aus Recyclingware hochreines PET zu erhalten, das ohne weitere Nachbehandlung für Getränke- und Lebensmittelverpackungen einsetzbar ist.

In der WO 2020-108705 A1 wird ein Verfahren zum Aufbereiten von festen Kunststoffpartikeln aus einem Polykondensat mittels eines solchen MRS-Systems beschrieben. Nach dem Einzug und dem teilweisem Aufschmelzen der Kunststoffpartikel in einer ersten Extrudersektion erfolgt eine Überleitung der teilweise aufgeschmolzenen Kunststoffmasse in eine zweite Extrudersektion, welche als Multischnecken-Extrudersektion gestaltet ist. Zwischen den Extrudersektionen ist ein Übergangskonus ausgebildet. Die verbliebenen Kunststoffpartikel werden hinter dem Übergangskonus in einer Antriebszone mit offen liegenden Antriebsritzeln der Satellitenschnecken vollständig aufgeschmolzen und danach durch eine Entgasungszone geleitet, in welcher ein Vakuum anliegt. Dadurch werden flüchtige Bestandteile aus der Kunststoffschmelze abgeführt. Jedoch liegt das Hauptanliegen hierbei auf der effektiven Aufschmelzung und weniger auf einer besonders intensiven Entgasung, die für einige Anwendungen benötigt wird.

Während die für Getränke- und Lebensmittelverpackungen erforderliche Viskosität mit dem bekannten MRS-Extruder problemlos erreichbar ist, ergibt sich bei Anwendungsprozessen, die PET mit noch höherer Viskosität benötigen, das Problem, dass sich auch bei Variation verschiedener Verfahrensparameter am MRS-Extruder eine maximal erreichbare Grenzviskosität einstellt. Viskositätserhöhung und -verringerung finden also stets gleichzeitig stand, wobei am Anfang die zur Viskositätserhöhung führenden Effekte noch überwiegen, sich dann aber irgendwann die Waage mit den gegenteiligen Effekten halten.

Die CN 103770312 B beschreibt einen Extruder, bei dem ein Einzugsbereich, ein Mahlscheibenmischbereich, ein Füllbereich, ein Mahlscheibenmischbereich, ein Auslassbereich und ein Extrusionsbereich hintereinandergeschaltet sind. Ein erstes Material tritt im Einzugsbereich ein. Ein zweites Material tritt im Füllbereich ein. Beide Materialien werden im Mahlscheibenmischbereich gemischt. Der Extruder ist so gestaltet, dass die Volumenänderung der Wendelnut vom Einzugsbereich zum Extrusionsbereich mit der spezifischen Volumenänderung im Materialschmelzprozess übereinstimmt. Die Schnecke weist dazu Durchmessersprünge auf. Die Verarbeitung homogener, unvermischter Kunststoffmassen mit dem Ziel einer starken Entgasung ist nicht offenbart.

Die EP 0588008 A1 gibt ein Hochleistungsentgasungs- und -begasungsverfahren sowie Entgasungs- oder -begasungseinrichtung für thermoplastische Kunststoffschmelzen u.ä. an, bei dem ein aufgeschäumtes Schmelze/Schleppmittelgemisch einem mechanischen, den Schaum zerstörenden Walzeneffekt unterworfen und einem Hochleistungsentgasungsextruder zugeführt wird. Die Schmelze wird großflächig zu dünnen Schichten ausgestrichen und im gesamten Verfahrensdünnschichtraum gleichzeitig einem Entgasungsunterdruck unterworfen. Allerdings ist hierbei vorgesehen, die Schmelze in mehreren Stufen durch Planetenabschnitt zu leiten, wo sie starker Scherung unterworfen wird. Der Scherenergieeintrag ist für viele Polymersorten nachteilig und verhindert z. B. im Falle der Verarbeitung von Polyester die Erhöhung der intrinsischen Viskosität.

Die Aufgabe der Erfindung besteht somit darin, eine Aufbereitung von Polymerschmelze, insbesondere von PET, zu ermöglichen, wobei eine hohe intrinsische Viskosität von wenigstens 0,7 ml/g erreichbar ist.

Diese Aufgabe wird durch einen Extruder mit den Merkmalen des Anspruchs 1 gelöst. Bevorzugte Ausführungen werden in den abhängigen Ansprüchen beansprucht.

Überraschenderweise führt ein Konzept zum Erfolg, das einzelne Designmerkmale der für die PET-Aufbereitung bewährten MRS-Extruder mit dem bekannten Monorotor für die Gummiverarbeitung kombiniert, aber auch eine weitere wesentliche Neuerung hinzufügt.

Zunächst basiert die Lösung der Erfindung auf einem Monorotor-Konzept, also auf einem Extruder mit nur einer Extruderschnecke. Auf die beim bekannten MRS-Extruder vorhandenen Planetenschnecken, die den meisten Anteil an der Scherung des Polymers haben, wird nach der Erfindung verzichtet. Zur Erhöhung der Umfangsgeschwindigkeit im Bereich der Vakuumabsaugung ist eine partielle Durchmesservergrößerung der Extruderschnecke in einer Entgasungszone vorgesehen. Die mit dem erfindungsgemäßen Extruder erzielbare Viskositätserhöhung ist aber wesentlich darauf zurückzuführen, dass die Entgasungszone zweigeteilt ist und folgende wesentliche Merkmale umfasst:
Um auf die Geometrie der Extruderschnecke Bezug nehmen zu können, werden die Durchmesser wie folgt bezeichnet:
- D1 in einer Einzugs-/Meteringzone
- D2 in einer Austragszone und
- D2 in dem dazwischen liegenden Bereich, in dem auch die Entgasungszone angeordnet ist.

Der Außendurchmesser der Extruderschnecke, der durch die Außenkante des Extruderschneckenstegs auf der Extruderschneckenwelle definiert ist, ist gegenüber der vorhergehenden Einzugs- und Meteringzone wie auch der sich anschließenden Austragszone deutlich erhöht und beträgt mindestens 1 ,2-fache bis 2,0 fache des dortigen Durchmessers. Er ist über die Länge bevorzugt weitgehend konstant, so dass sich eine zylindrische Hüllkurve ergibt. Damit kann die zugehörige Bohrung im Gehäuse einfach hergestellt werden und geringe axiale Verschiebungen zwischen Extruderschnecke und Gehäuse sind möglich. Lediglich in den Übergangsbereichen zu den Abschnitten der Extruderschnecke davor und danach ergibt sich bevorzugt eine Kegelform.

Der Außendurchmesser des Wellenkerns der Extruderschnecke hingegen variiert in zwei Teilbereichen der Entgasungszone stark: während er in einem stromaufwärts liegenden Anfangsbereich ebenfalls groß ist, wodurch sich eine geringe Gangtiefe zwischen den parallelen Abschnitten des Extruderschneckenstegs ergibt, ist er im anschließenden Endbereich deutlich kleiner, so dass sich tiefe Gänge ergeben.

Die wenigstens eine Absaugöffnung des Gehäuses befindet sich dort, wo die Gangtiefe groß ist. Sie kann sich bis zu dem Durchmessersprung des Wellenkerns zwischen Anfangs- und Endbereich erstrecken.

Die bereits im ersten Teil der Extruderschnecke plastifizierte Schmelze wird im Anfangsbereich der Entgasungszone stark komprimiert, da dort das freie Volumen in den zwischen Schneckensteg, Wellenkern und Gehäusebohrung gebildeten Gängen gering ist.

Im Endbereich der Entgasungszone ist das Volumen aber sehr viel größer und kann durch die herangeführte Schmelze nicht annähernd ausgefüllt werden. Am Durchmessersprung des Wellenkerns findet daher eine schlagartige Expansion der Schmelze in das freie Volumen statt. Der Schmelzestrom reißt auf und führt zu einer erheblichen Oberflächenvergrößerung der Schmelze, welche die Absaugung der flüchtigen Stoffe aus der Schmelze ermöglicht.

Die Antriebsleistung für den erfindungsgemäßen Extruder ist gegenüber dem Stand der Technik durch den Entfall der angetriebenen Satellitenschnecken reduziert.

Wird der Durchmesser D2 > 1,5 x D1 gewählt, so wird gewährleistet, dass in der durch den Entgasungsanschluss gebildeten Vakuumkammer des Extruders eine noch großflächigere Wechselwirkung zwischen Schmelze und Vakuum erreicht wird.

Zweckmäßig ist, dass die Länge der Schnecke in der Entgasungszone 2 x D2 ist. Damit ergibt sich eine möglichst große Fläche, die über den Entgasungsanschluss entgast werden kann, so dass die Fläche, an die das Vakuum angreifen kann, gegenüber einem gattungsgemäßen Mehrschneckenextruderteil nur unwesentlich kleiner ist.

Wenn z.B. die Steigung des Schneckenstegs im Eingangsbereich und in der Entgasungszone im Wesentlichen gleich groß sind, ist es von Vorteil, wenn in der Entgasungszone der Schnecke zwischen dem Schneckensteg mindestens einen weiteren Schneckensteg mit im Wesentlichen gleicher Steigung vorgesehen ist.

Durch die Durchmesservergrößerung im Endbereich der Entgasungszone des Extruders würde der Schneckensteg bei gleicher Steigung wie in der Einzugs- und Meteringzone erheblich weiter auseinander liegen als in der Einzugs-/Meteringzone bzw. der Austragszone der Schnecke. Durch das Vorsehen mindestens eines zweiten Schneckenstegs bzw. mehrerer Schneckenstege, die innerhalb des ersten Schneckenstegs angeordnet ist/sind, ergeben sich auf die Länge der Schnecke in der Entgasungszone mehr Scherstellen zwischen dem Gehäuse den Wendeln, die Walkarbeit und Vorschubarbeit leisten können, so dass die Oberfläche der Schmelze in der Entgasungszone noch weiter vergrößert wird.

Es besteht aber auch die Möglichkeit, dass z.B. die Steigung der Schnecke in der Einzugs-/Meteringzone und in der Austragszone im Wesentlichen gleich groß ist, dass aber die Steigung der Schneckenwendel in der Entgasungszone größer ist als dort.

Dadurch wächst der Schneckensteg in der Entgasungszone des Extruders näher zusammen. Auch dadurch kann erreicht werden, dass mehr Walkarbeit und Vortriebsarbeit in die Schmelze eingebracht werden kann, wodurch sich die Oberfläche der Schmelze, die mit dem Vakuum in Kontakt kommt, vergrö-ßert.

Vorteilhaft ist, wenn die Gangtiefe des Schneckenstegs in der Entgasungszone mindestens 10% des Durchmessers D2 der Schnecke in der Entgasungszone beträgt. Von Vorteil ist aber auch, wenn die Oberfläche der zwischen dem/den Schneckensteg(en) in der Entgasungszone der Schnecke ausgebildeten Gänge mindestens 1 ,5mal so groß ist wie die Oberfläche des zwischen der Wendel im Eingangsbereich angeordneten Nut.

Durch jede dieser Maßnahmen wird erreicht, dass die Gänge zwischen den Schneckenstegen nicht voll mit Schmelze gefüllt werden. Die Schmelze hat in einer entsprechenden Nut an der Flanke der Schneckenstege die größte Höhe und fällt zum Grund hin ab, und/oder kann sich über eine größere Länge verteilen. Hinzu kommt, dass durch die Bewegung der Schnecke die Schmelze im Gang zudem durchgewalkt werden kann. Auch diese Maßnahmen dienen dazu, dass in gleicher Zeit eine größere Schmelzeoberfläche mit dem Unterdruck, der an den Entgasungsanschlüssen herrscht, in Kontakt kommt, und somit die Schmelze besser entgast werden kann.

Vorteilhaft kann sein, wenn der Extruder im Übergang von der Meteringzone zur Entgasungszone eine einstellbare Drossel bzw. einen einstellbaren Stauring aufweist, über welchen der Scherspalt justiert werden kann. Dadurch kann einerseits sichergestellt werden, dass nur einwandfrei plastifizierte Schmelze in die Entgasungszone gelangt. Andererseits wird eine gewisse Abdichtung erreicht, die gewährleistet, dass es zu keinem Kurzschluss für den Unterdruck zum Eingangsbereich kommen kann.

Kurz gesagt beruht die Erfindung darauf, dass das Aufreißen, Verwirbeln und Durchmischen der Schmelze im Bereich der Absaugung nicht durch mechanische Mischelemente bewirkt wird wie im Stand der Technik, sondern durch das Prinzip einer Expansionsdüse, welche bei der Erfindung durch den sich schlagartig reduzierenden Kerndurchmesser bei gleichem Stegaußendurchmesser und konstantem Innendurchmesser der Gehäusebohrung in diesem Bereich bewirkt wird.

Das erfindungsgemäße Prinzip der Expansionsdüse in der Entgasungszone zieht neben den beschriebenen mechanischen Einflüssen auf die Schmelze auch einen Temperatureinfluss, nämlich eine Abkühlung, nach sich. Die sich einstellende Abkühlung kann bei dem erfindungsgemäßen Extruder als zusätzlicher Effekt in verschiedener Weise genutzt werden.

Während beim MRS-Extruder im Stand der Technik fast immer eine innere Kühlung der Extruderschneckenwelle in der Entgasungszone notwendig ist, um den enormen Wärmeeintrag infolge mechanischer Scherung zu kompensieren, kann nach der Erfindung zumindest für den Endbereich der Entgasungszone darauf verzichtet werden. Damit wird die für die gesamte Extruderschnecke notwendige Kühlleistung zumindest reduziert.

Unter Umständen ist die Abkühlung so stark, dass die Schmelze partiell einfrieren kann. Um dem entgegen zu wirken, kann eine Beheizung des Endbereichs der Entgasungszone vorgesehen sein. Dazu kann zum Beispiel das Gehäuse mit Heizbändern beheizt werden.

Da andererseits auch bei dem erfindungsgemäßen Extruder immer noch ein starker Wärmeeintrag durch Scherung in der Einzugs- und Meteringzone gegeben ist, bietet es sich an, auf eine externe Temperierung der Extruderschnecke zu verzichten und stattdessen ein Fluid zur Temperierung durch innere Kanäle der Schnecke umlaufen zu lassen, wozu nur eine externe Pumpe vorgesehen ist, jedoch kein externer Wärmetauscher Das Fluid wird am Wellenende in eine innere Schneckenbohrung eingeleitet, erwärmt sich in der Einzugs- und Meteringzone, evtl. auch noch im Anfangsbereich der Entgasungszone und gibt dann die Wärme im Endbereich an die in den tiefen Schneckengängen geführte, abgekühlte Schmelze ab. Die Ausleitung erfolgt am anderen Ende der Extruderschneckenwelle. Der Rücklauf zur Pumpe erfolgt extern.

Von Vorteil ist dazu, wenn die Schnecke Temperierkanäle aufweist, die insbesondere in der Entgasungszone z.B. in Form von peripheren Kanälen oder als konzentrischer Kanal, eine schnell wirkende, präzise Einstellung der Oberflächentemperatur der Schnecke gewährleisten. Selbst die Schneckenstege lassen sich als Kanäle ausbilden.

Die Erfindung wird nachfolgend mit Bezug auf das in den Zeichnungen dargestellte Ausführungsbeispiel eines Extruders näher erläutert. Die Figuren zeigen im Einzelnen:
- Fig. 1: einen Extruder in perspektivischer Ansicht von außen
- Fig. 2: eine Extruderschnecke in perspektivischer Ansicht;
- Fig. 3: ein Detail der Extruderschnecke in Seitenansicht;
- Fig. 4: ein Detail des Extruders in perspektivischer Ansicht;
- Fig. 5: ein Detail des Extruders in seitlicher, teilweise geschnittener Ansicht und
- Fig. 6: eine schematische Schnittdarstellung des Extruders.

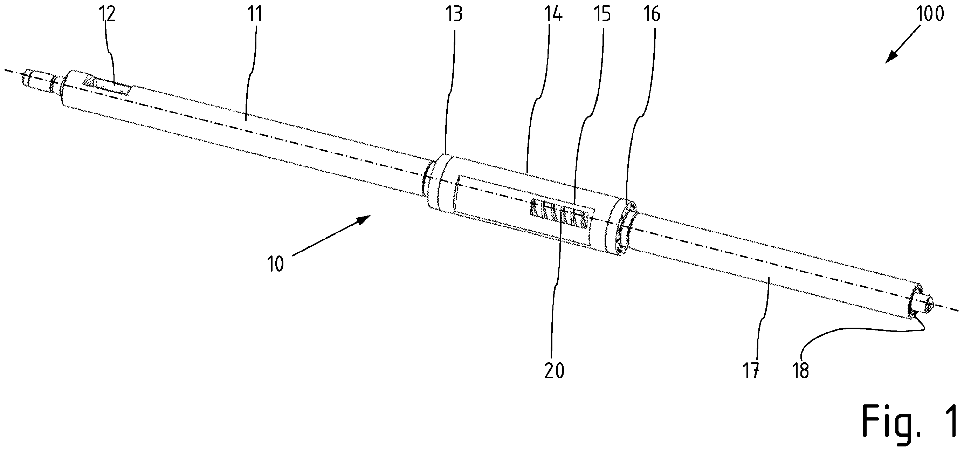

In Figur 1 ist ein Extruder 100 nach der Erfindung in perspektivischer Ansicht von außen dargestellt, wobei endseitige Lager- und Antriebselemente nicht dargestellt sind. Sichtbar ist insbesondere das Gehäuse 10 mit einer inneren Gehäuseausnehmung 18, in der eine Extruderschnecke 20 rotierbar gelagert ist. Das Gehäuse 10 besitzt einen Eingangsbereich 11 mit einer Einzugsöffnung 12 für feste Polymerpartikel. Über einen Verbindungsflansch 13 schließt sich ein Zwischenbereich 14 mit erweitertem Durchmesser an, der wenigstens eine Gehäuseöffnung 15 aufweist, die sich bis in die innenliegende Gehäuseausnehmung 18 erstreckt. An der Gehäuseöffnung 15 wird eine Absaugeinrichtung angeschlossen, insbesondere eine Vakuumpumpe.

Über einen weiteren Verbindungsflansch 16 schließt sich ein Endbereich 17 des Gehäuses 10 an, dessen Durchmesser wiederum reduziert ist und der in etwa dem des Anfangsbereiches 11 entspricht. Am Ende des Endbereichs 17 öffnet sich die insbesondere als zylindrische Bohrung ausgebildete Gehäuseausnehmung 18, so dass von dieser Stelle aus die aufbereitete Polymerschmelze zur weiteren Verarbeitung abgeleitet werden kann.

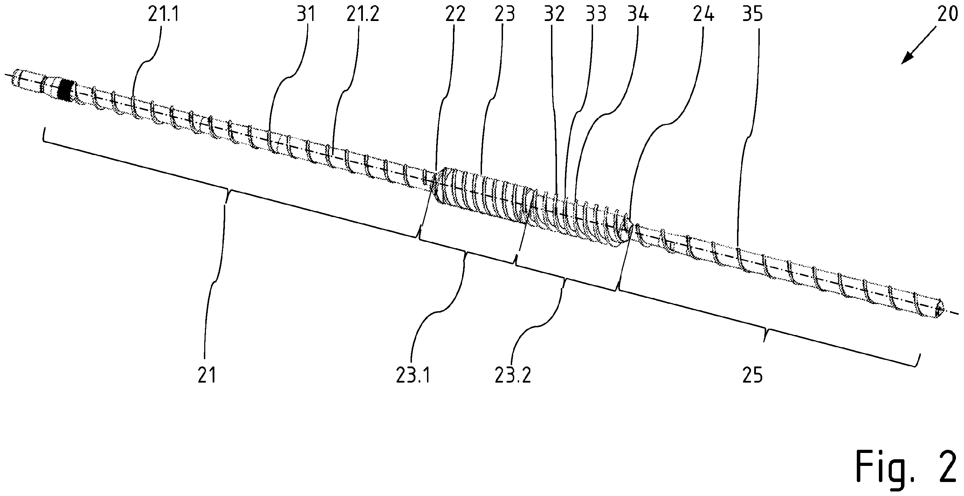

Figur 2 zeigt die Extruderschnecke 20 in perspektivischer Ansicht. Eine Einzugszone 21.1 dient dem Einzug des Polymers als Feststoffpartikel. Es schließt sich eine Meteringzone 21.2 an. Eine Einzugszone 21.1 und eine Meteringzone 21.2 bilden zusammen einen Durchmesseranfangsbereich 21 und besitzen einen gemeinsamen wendelförmigen Extruderschneckensteg 31. Die Extruderschnecke 20 hat eine Austragszone 25 mit gleichem oder ähnlichem Durchmesser wie Einzugszone 21.1 und Meteringzone 21.2 und besitzt ebenfalls nur einen Extruderschneckensteg 35.

Dazwischen befindet sich in einem Durchmessermittelbereich eine Entgasungszone 23, die sich wiederum in einen Anfangsbereich 23.1 und einen Endbereich 23.2 unterteilt. In der Entgasungszone 23 ist der Schneckenwellenkern, dessen Durchmesser über die Länge variiert, von insgesamt drei ineinander verschlungenen Extruderschneckenstegen 32, 33, 34 umgeben.

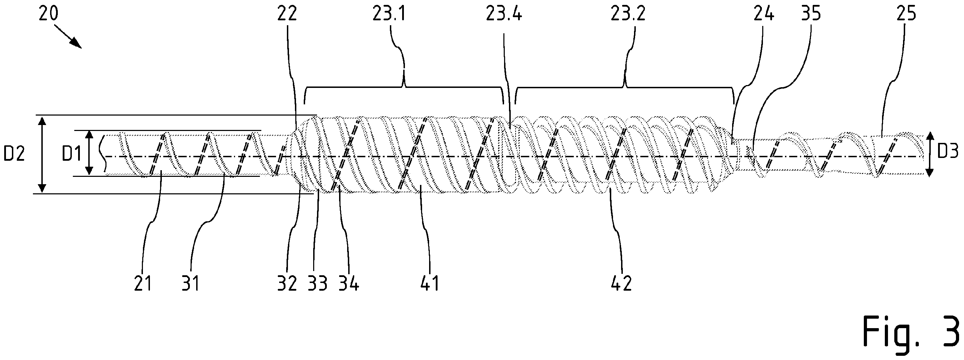

In Figur 3 ist dieser erfindungswesentliche Abschnitt der Extruderschnecke 20 in einer vergrößerten, seitlichen Ansicht dargestellt, wobei auch die jeweiligen Außendurchmesser D1, D2, D3 bezeichnet sind. Beispielhaft sind die Abmaße und geometrischen Relationen wie folgt:
- In der Meteringzone 21.2 weist der Extruderschneckensteg 31 einen relativ kleinen Außendurchmesser D1 von 110 mm auf.
- In der Austragszone 25 weist der Extruderschneckensteg 35 einen Außendurchmesser D2 auf, welcher dem 0,8 bis 1,2fachen des Außendurchmessers D1 entspricht, also in etwa D1 entspricht, aber 20% größer oder kleiner sein kann;
- In der Entgasungszone 23 weisen die Extruderschneckenstege 32, 33, 34 einen einheitliche Außendurchmesser D2 auf, der wenigstens dem 1,5fachen von D2 entspricht, insbesondere sogar doppelt so groß ist. Im Beispiel ist D2 = 190 mm.

Die Außendurchmesser D1, D2 und D3 variieren also nur zwischen den Zonen, sind innerhalb der jeweiligen Zone 21.2, 23, 25 aber konstant. Dazwischen sind kegelförmige Übergangskonuszonen 22, 24 ausgebildet

Der Wellenkerndurchmesser ist sowohl in der Meteringzone 21.2 wie in der Austragszone 25 weitgehend konstant. Kleine Variationen des Wellenkerndurchmessers und/oder der Steigung der Schnecke sind vorgesehen, wie in der Extrusionstechnik üblich, um eine Homogenisierung und Verdichtung zu erreichen und/oder die Fließgeschwindigkeit lokal zu beeinflussen.

Unmittelbar im Übergang von der Entgasungszone 23 zur Austragszone 25 ist der Wellenkerndurchmesser der Austragszone 25 beispielsweise gegenüber dem Durchmesser im weiteren Verlauf reduziert, damit der Schmelzedruck in der Austragszone erneut aufgebaut werden kann, nachdem er in der Entgasungszone aufgrund des dort anliegenden Vakuums bei annähernd null lag.

Erfindungswesentlich ist, dass sich der Wellenkerndurchmesser innerhalb der Entgasungszone 23 an einer Übergangsstelle 23.4 schlagartig reduziert. Während im Anfangsbereich 23.1 der Entgasungszone 23 der Wellenkerndurchmesser groß ist und die Höhe der Extruderschneckenstege 32, 33, 34 und damit die Höhe der dazwischen ausgebildeten Gänge 41 klein ist, ist der Wellenkerndurchmesser im Endbereich 23.2 deutlich kleiner. Bei dem angeführten Beispiel beträgt bei den Gängen 41 im Anfangsabschnitt 23.1 die Gangtiefe 4 mm, insbesondere zwischen 10% und 20% des Außendurchmessers D2. Im Endbereich 23.2 bei den Gängen 42 beträgt die Gangtiefe 32 mm, so dass sich die Höhe der Gänge 42 dort um den Faktor 3 bis 10 gegenüber den Gängen 41 im Anfangsbereich 23.1 vergrößert hat.

Die gestrichelten Doppellinien in Figur 3 dienen dazu, den Verlauf der Extruderschneckenstege zu kennzeichnen. In der Meteringzone 21.2 und der Austragszone 25 gibt es jeweils nur einen wendelförmigen Extruderschneckensteg 31, 35. In der Entgasungszone 23 kennzeichnen die gestrichelten Doppellinien nur den Verlauf eines ersten Extruderschneckenstegs 32. Es ist deutlich zu erkennen, dass diese Linien jeweils zwei weitere Extruderschneckenstege 33, 34 überkreuzen. Damit sind in der Entgasungszone 23 insgesamt drei ineinander verschlungene Extruderschneckenstege 32, 33, 34 ausgebildet.

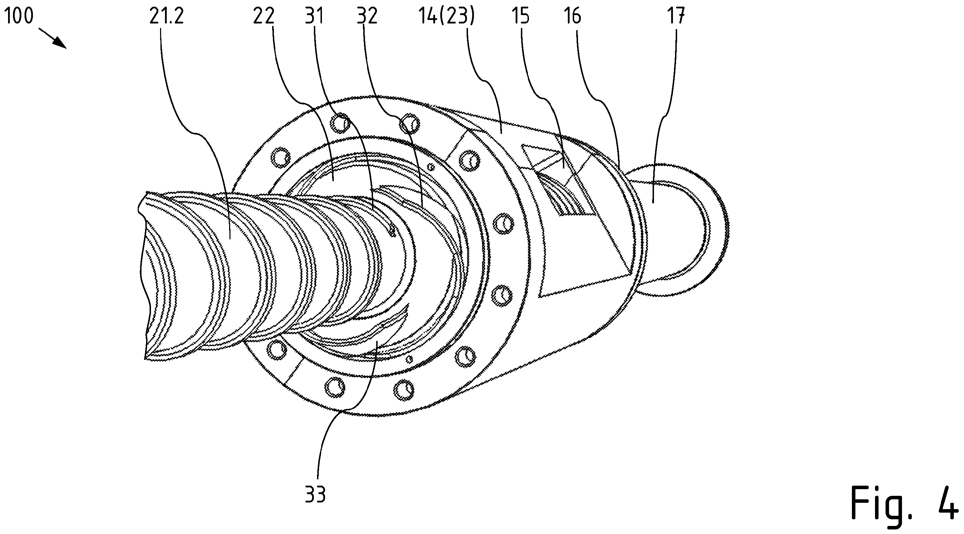

Figur 4 zeigt in einer perspektivischen Ansicht den Übergang von der Meteringzone 21.2 in die Entgasungszone 23. Dazu sind die Gehäuseteile 11 und 13 (siehe Fig. 1) entfernt, so dass ein freier Blick auf die kegelförmige Übergangszone 22 gegeben ist. Der Extruderschneckensteg 31 der Meteringzone 21.2 läuft vor der Übergangszone 22 aus. Bereits innerhalb der Übergangszone 22 haben die drei Extruderschneckenstege der Entgasungszone 23 ihren Anfang, wobei in Figur 4 nur die Anfänge der Extruderschneckenstege 32, 33 sichtbar sind. Durch den Abschluss des Extruderschneckenstegs 31 vor der Übergangszone 22 und den Beginn der drei Extruderschneckenstege 32, 33 und 34 in der Übergangszone 22 wird eine frühzeitige Aufteilung des Schmelzestroms in drei Teilströme erreicht.

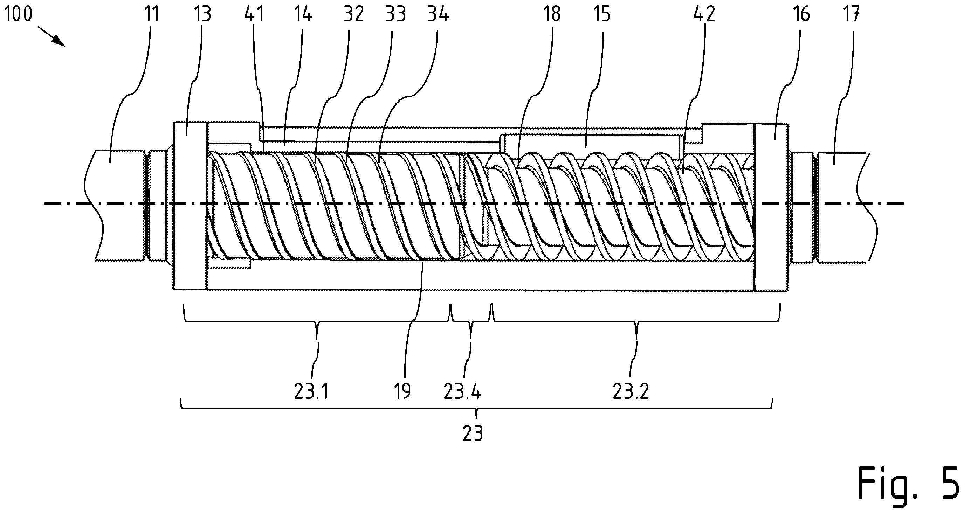

Figur 5 zeigt den erfindungswesentlichen Teil des erfindungsgemäßen Extruders 100 in einer teilweise geschnittenen Ansicht. Hierin ist der Zwischenbereich 14 des Gehäuses 10 geschnitten dargestellt. Dadurch ist zum einen erkennbar, dass die Innenwandung 19 der Gehäuseausnehmung im Schnitt völlig geradlinig verläuft, dass die Gehäusebohrung also zylindrisch ist, mit Ausnahme der Unterbrechung an der Absaugöffnung 15. Weiterhin ist erkennbar, dass die Außenkanten aller drei Extruderschneckenstege 32, 33, 34 stets sehr dicht vor der Innenwandung 19 enden. Im Anfangsbereich 23.1 bilden sich sehr enge Gänge 41, durch welche der gesamte Schmelzestrom hindurch gefördert werden muss. Schließlich erkennt man in Figur 5 gut den Verlauf des Durchmessers des Extruderwellenkerns, der sich in der Übergangsstelle 23.4 schlagartig reduziert und dann im Endbereich 23.2 konstant klein bleibt. Dadurch bilden sich großvolumige Gänge 42 zwischen der Innenwandung 19, den parallelen Abschnitten der Extruderschneckenstege 32, 33, 34 und dem Extruderwellenkern.

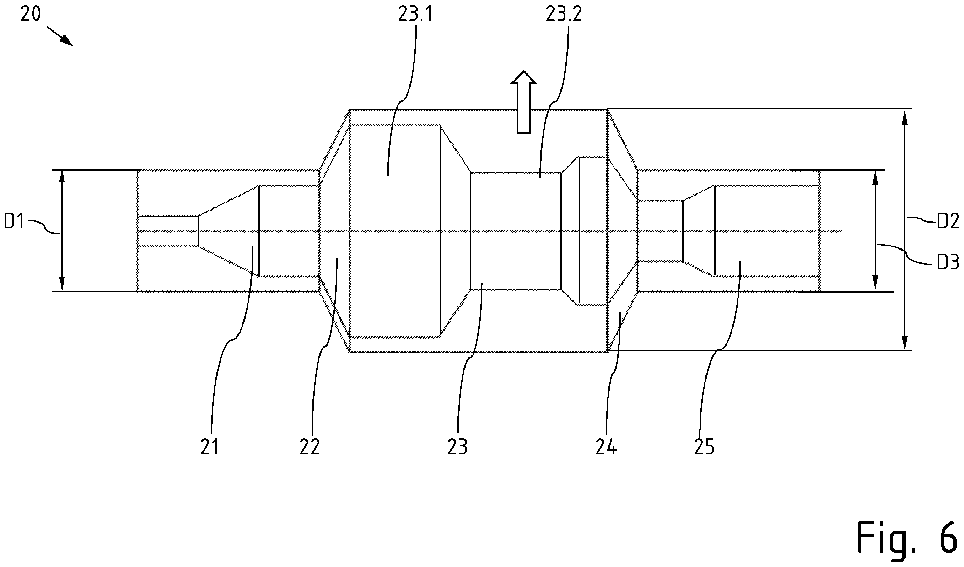

Figur 6 ist eine schematische, stark überzeichnete Darstellung der Größenverhältnisse an der Extruderschnecke 20. Abgebildet sind der Wellenkerndurchmesser und der über die Außenkanten der Stege gemessene Außendurchmesser. Durch diese Darstellung wird insbesondere die Variation der Gangtiefe über die Länge der Extruderschnecke 20 deutlich. Zum Ende der Meteringzone 21 steigt der Wellenkerndurchmesser an. Der Außendurchmesser D1 bleibt konstant. Dadurch verringert sind die Gangtiefe. Es kommt zu einer Kompression der geförderten Schmelze. In der Übergangskonuszone 22 weitet sich das durchströmbare Volumen auf, weil der Außendurchmesser auf D2 steigt. Dies wird durch eine nochmalige Reduzierung der Gangtiefe in der konischen Übergangskonuszone 22 ausgeglichen. Das Ziel ist, die Schmelze so bis in den Anfangsbereich 23.1 zu fördern, dass die gebildeten Fließkanäle gefüllt sind. Der enge Spalt dort erhöht außerdem die Scherung.

In der Mitte der Entgasungszone 23 ist der Wellenkerndurchmesser schlagartig deutlich reduziert, wobei der Außendurchmesser D2 der Stege konstant bleibt. Das dort entstehende Volumen des Fließkanals kann von der über die Anfangszone 23.1 herangeführten Schmelze nicht mehr gefüllt werden. Es kommt zu einer schlagartigen Expansion der zuvor stark gescherten und damit auch stark erhitzten Schmelze. Bei der Expansion lösen sich die enthaltenen flüchtigen Stoffe besonders gut und können abgesaugt werden, wie durch den Blockpfeil angedeutet.

Danach kommt zu einer mehrfachen Fließkanalverengung, um die Schmelze wieder gasfrei zu sammeln und homogen zu fördern. Dazu verjüngt sich der Fließkanal zunächst leicht zur Übergangskonuszone 24 hin. In der Übergangszone 24 haben die Stege und der Wellenkern jeweils einen unterschiedlichen Konuswinkel, wodurch auch eine Fließkanalvergrößerung bewirkt wird. Zwischen der Übergangskonuszone 24 und dem Beginn der Austragszone 25 ist eine kurze konstante Gangtiefe vorgesehen, bevor sich der Wellenkerndurchmesser wieder vergrößert und die Gangtiefe folglich bei konstantem Außendurchmesser D2 der Extruderschneckenstege reduziert ist.

## Patentansprüche

1. Extruder (100) zur viskositätserhöhenden Aufbereitung von aufschmelzbaren Polymeren, wenigstens umfassend ein Gehäuse (10) mit einer inneren Gehäuseausnehmung (18), in welcher eine Extruderschnecke (20) mit wenigstens einem schraubenwendelförmigen Extruderschneckensteg (31, ..., 35) rotierbar angeordnet ist,
welche Extruderschnecke (20) sich hinsichtlich ihres Außendurchmessers in einen Durchmesseranfangsbereich (21), einen Durchmessermittelbereich und einen Durchmesserendbereich unterteilt, wobei:
- der Durchmessermittelbereich einen größeren Außendurchmesser besitzt als die übrigen Durchmesserbereiche;
- zwischen Durchmesserbereichen mit unterschiedlichem Durchmesser jeweils eine Übergangskonuszone (22, 24) ausgebildet ist;
- im Durchmessermittelbereich wenigstens eine Entgasungszone (23) ausgebildet ist, welche eine Gehäuseausnehmung aufweist, von der aus sich wenigstens eine Absaugöffnung (15) zu einer Außenseite des Gehäuses (10) erstreckt, die in einem Endabschnitt (23.2) am Ende der Entgasungszone (23) angeordnet ist,
- **dadurch gekennzeichnet, dass** im Durchmessermittelbereich der Extruderschnecke (20) ein zwischen einem Extruderschneckenwellenkern und einer Innenwandung (19) der Gehäuseausnehmung (18) ausgebildeter Fließkanal als ringförmige Expansionsdüse ausgebildet ist, wobei der Außendurchmesser des wenigstens einen Extruderschneckenstegs (32, 33, 34) konstant ist und sich die radiale Fließkanalhöhe erweitert.

2. Extruder (100) nach Anspruch 1, **dadurch gekennzeichnet, dass** die Extruderschnecke (20) funktionell zumindest in eine Meteringzone (21.2), in die Entgasungszone (23) und in eine Austragszone (25) unterteilt ist, wobei:
- an der Extruderschnecke in der Meteringzone (21.2) Mittel zur Kompression und/oder Homogenisierung der Polymerschmelze ausgebildet sind und sich die Meteringzone (21.2) in Fließrichtung gesehen vom Durchmesseranfangsbereich (21) über die Übergangskonuszone (22) hinweg bis in den Durchmessermittelbereich erstreckt; und
- die Austragszone (25) vollständig im Durchmesserendbereich ausgebildet ist.

3. Extruder (100) nach Anspruch 1 oder 2, **dadurch gekennzeichnet, dass** der Extruderschneckensteg (32, 33, 34) im Durchmessermittelbereich einen Außendurchmesser D2 aufweist, der wenigstens dem 1,5fachen des Durchmessers D1 im Durchmesseranfangsbereich (21) entspricht.

4. Extruder (100) nach einem der Ansprüche 1 bis 3, **dadurch gekennzeichnet, dass** der Durchmessermittelbereich einen Anfangsbereich (23.1) und einen Endbereich (23.2) aufweist, und dass die radiale Gangtiefe der zwischen benachbarten Abschnitten des wenigstens einen Extruderschneckenstegs (32, 33, 34) ausgebildeten Gänge im Anfangsbereich (23.1) kleiner ist als im Endbereich (23.2).

5. Extruder (100) nach einem der vorhergehenden Ansprüche, **dadurch gekennzeichnet, dass** die Gangtiefe der Extruderschneckenstege (32, 33, 34) im Endbereich (23.2) des Durchmessermittelbereichs wenigstens das Dreifache der Gangtiefe des Anfangsbereichs (23.1) beträgt.

6. Extruder (100) nach einem der vorhergehenden Ansprüche, **dadurch gekennzeichnet, dass** die Gangtiefe des wenigstens einen Extruderschneckenstegs (32, 33, 34) im Anfangsbereich (23.1) der Entgasungszone (23) 1% bis 5% des Durchmessers D2 beträgt.

7. Extruder (100) nach einem der vorhergehenden Ansprüche, **dadurch gekennzeichnet, dass** die Gangtiefe des wenigstens einen Extruderschneckenstegs (32, 33, 34) im Endbereich (23.2) mindestens 10% des Durchmessers D2 in der Entgasungszone (23) beträgt.

8. Extruder (100) nach einem der vorhergehenden Ansprüche, **dadurch gekennzeichnet, dass** die Gangtiefe des wenigstens einen Extruderschneckenstegs (32, 33, 34) im Endbereich (23.2) wenigstens 20 mmm beträgt.

9. Extruder (100) nach einem der vorhergehenden Ansprüche, **dadurch gekennzeichnet, dass** der Durchmesser D2 wenigstens dem 1,5fachen von D1 entspricht.

10. Extruder (100) nach einem der vorhergehenden Ansprüche, **dadurch gekennzeichnet, dass** die Länge der Entgasungszone (23) wenigstens das 2,0fache von D2 beträgt.

11. Extruder (100) nach einem der vorhergehenden Ansprüche, **dadurch gekennzeichnet, dass** die Extruderschnecke (20) am Übergang von der Meteringzone (21.2) zum Anfangsabschnitt (23.1) und/oder am Übergang von dem Endbereich (23.2) zur Austragszone (25) jeweils eine kegelförmige Übergangszone (22, 24) aufweist, in welcher der Extruderschneckensteg (31, 32, 33, 34, 35) unterbrochen ist.

12. Extruder (100) nach einem der vorhergehenden Ansprüche, **dadurch gekennzeichnet, dass** zumindest in der Entgasungszone (23) wenigstens zwei ineinander verschlungene Extruderschneckenstege (32, 33, 34) mit gleicher Steigung auf der Extruderschnecke (20) ausgebildet sind.

## Claims

1. Extruder (100) for the viscosity-increasing preparation of meltable polymers, at least comprising a barrel (10) having an inner barrel aperture (18) in which an extruder screw (20) having at least one extruder screw flight (31, ..., 35) in the form of a helical coil is rotatably arranged, which extruder screw (20) is divided in terms of its external diameter into a diameter start region (21), a diameter middle region and a diameter end region, wherein:
- the diameter middle region has a greater external diameter than the rest of the diameter regions;
- a respective transition cone zone (22, 24) is formed between diameter regions of different diameter;
- at least one degassing zone (23) is formed in the diameter middle region and has a barrel aperture from which at least one suction-removal opening (15) extends to an outer side of the barrel (10), said suction-removal opening being arranged in an end portion (23.2) at the end of the degassing zone (23),
- **characterized in that**, in the diameter middle region of the extruder screw (20), a flow channel which is formed between an extruder screw shaft core and an inner wall (19) of the barrel aperture (18) is in the form of an annular expansion nozzle, wherein the external diameter of the at least one extruder screw flight (32, 33, 34) is constant and the radial height of the flow channel becomes larger.

2. Extruder (100) according to Claim 1, **characterized in that** the extruder screw (20) is functionally divided at least into a metering zone (21.2), into the degassing zone (23) and into a discharge zone (25), wherein:
- means for compressing and/or homogenizing the polymer melt are formed on the extruder screw in the metering zone (21.2), and the metering zone (21.2) extends, as seen in a flow direction, from the diameter start region (21) over the transition cone zone (22) into the diameter middle region; and
- the discharge zone (25) is formed completely in the diameter end region.

3. Extruder (100) according to Claim 1 or 2, **characterized in that** the extruder screw flight (32, 33, 34) in the diameter middle region has an external diameter D2 which corresponds to at least 1.5 times the diameter D1 in the diameter start region (21).

4. Extruder (100) according to one of Claims 1 to 3, **characterized in that** the diameter middle region has a start region (23.1) and an end region (23.2), and **in that** the radial channel depth of the channels formed between adjacent portions of the at least one extruder screw flight (32, 33, 34) is smaller in the start region (23.1) than in the end region (23.2).

5. Extruder (100) according to one of the preceding claims, **characterized in that** the channel depth of the extruder screw flights (32, 33, 34) in the end region (23.2) of the diameter middle region amounts to at least three times the channel depth of the start region (23.1).

6. Extruder (100) according to one of the preceding claims, **characterized in that** the channel depth of the at least one extruder screw flight (32, 33, 34) in the start region (23.1) of the degassing zone (23) amounts to 1% to 5% of the diameter D2.

7. Extruder (100) according to one of the preceding claims, **characterized in that** the channel depth of the at least one extruder screw flight (32, 33, 34) in the end region (23.2) amounts to at least 10% of the diameter D2 in the degassing zone (23).

8. Extruder (100) according to one of the preceding claims, **characterized in that** the channel depth of the at least one extruder screw flight (32, 33, 34) in the end region (23.2) amounts to at least 20 mm.

9. Extruder (100) according to one of the preceding claims, **characterized in that** the diameter D2 corresponds to at least 1.5 times D1.

10. Extruder (100) according to one of the preceding claims, **characterized in that** the length of the degassing zone (23) amounts to at least 2.0 times D2.

11. Extruder (100) according to one of the preceding claims, **characterized in that** the extruder screw (20) has, at the transition from the metering zone (21.2) to the start portion (23.1) and/or at the transition from the end region (23.2) to the discharge zone (25), a respective conical transition zone (22, 24) in which the extruder screw flight (31, 32, 33, 34, 35) is interrupted.

12. Extruder (100) according to one of the preceding claims, **characterized in that**, at least in the degassing zone (23), at least two intertwined extruder screw flights (32, 33, 34) with identical pitch are formed on the extruder screw (20).

## Revendications

1. Extrudeuse (100) destinée à la préparation de polymères fusibles afin d'augmenter la viscosité, ladite extrudeuse comprenant au moins un boîtier (10) pourvu d'un évidement intérieur (18) dans lequel une vis d'extrudeuse (20) pourvue d'au moins un filet de vis d'extrudeuse hélicoïdale (31, ..., 35) est disposée de manière rotative,
laquelle vis d'extrudeuse (20) est divisée en termes de diamètre extérieur en une zone de diamètre initiale (21), une zone de diamètre médiane et une zone de diamètre finale :
- la zone de diamètre médiane ayant un diamètre extérieur supérieur à ceux des autres zones de diamètre ;
- une zone de cône de transition (22, 24) étant formée entre des zones de diamètres différents ;
- au moins une zone de dégazage (23) étant formée dans la zone de diamètre médiane et comportant un évidement de boîtier à partir duquel au moins une ouverture d'aspiration (15), qui est ménagée dans une portion d'extrémité (23.2) à l'extrémité de la zone de dégazage (23), s'étend en direction du côté extérieur du boîtier (10),
- **caractérisée en ce que** dans la zone de diamètre médiane de la vis d'extrudeuse (20), un canal d'écoulement formé entre un noyau d'arbre de vis d'extrudeuse et une paroi intérieure (19) de l'évidement de boîtier (18) est conçu comme une buse d'expansion annulaire, le diamètre extérieur de l'au moins un filet de vis d'extrudeuse (32, 33, 34) étant constant et la hauteur radiale du canal d'écoulement s'élargissant.

2. Extrudeuse (100) selon la revendication 1, **caractérisée en ce que** la vis d'extrudeuse (20) est divisée fonctionnellement en au moins une zone de dosage (21.2), la zone de dégazage (23) et une zone d'évacuation (25) :
- des moyens de compression et/ou d'homogénéisation du polymère en fusion étant formés sur la vis d'extrudeuse dans la zone de dosage (21.2) et la zone de dosage (21.2), vue dans le sens d'écoulement, s'étendant depuis la zone de diamètre initiale (21) via la zone de cône de transition (22) jusque dans la zone de diamètre médiane ; et
- la zone d'évacuation (25) étant formée entièrement dans la zone de diamètre finale.

3. Extrudeuse (100) selon la revendication 1 ou 2, **caractérisée en ce que** le filet de vis d'extrudeuse (32, 33, 34) a un diamètre extérieur D2 dans la zone de diamètre médiane qui correspond au moins à 1,5 fois le diamètre D1 dans la zone de diamètre initiale (21).

4. Extrudeuse (100) selon l'une des revendications 1 à 3, **caractérisée en ce que** la zone de diamètre médiane comporte une zone initiale (23.1) et une zone finale (23.2), et **en ce que** la profondeur de spire radiale de spires formées entre des portions adjacentes de l'au moins un filet de vis d'extrudeuse (32, 33, 34) dans la zone initiale (23.1) est inférieure à celle dans la zone finale (23.2).

5. Extrudeuse (100) selon l'une des revendications précédentes, **caractérisée en ce que** la profondeur de spire des filets de vis d'extrudeuse (32, 33, 34) dans la zone finale (23.2) de la zone de diamètre médiane est égale à au moins trois fois la profondeur de spire de la zone initiale (23.1).

6. Extrudeuse (100) selon l'une des revendications précédentes, **caractérisée en ce que** la profondeur de spire de l'au moins un filet de vis d'extrudeuse (32, 33, 34) dans la zone initiale (23.1) de la zone de dégazage (23) est égale à 1 % à 5 % du diamètre D2.

7. Extrudeuse (100) selon l'une des revendications précédentes, **caractérisée en ce que** la profondeur de spire de l'au moins un filet de vis d'extrudeuse (32, 33, 34) dans la zone finale (23.2) est égale à au moins 10 % du diamètre D2 dans la zone de dégazage (23).

8. Extrudeuse (100) selon l'une des revendications précédentes, **caractérisée en ce que** la profondeur de spire de l'au moins un filet de vis d'extrudeuse (32, 33, 34) dans la zone finale (23.2) est égale à au moins 20 mm.

9. Extrudeuse (100) selon l'une des revendications précédentes, **caractérisée en ce que** le diamètre D2 correspond à au moins 1,5 fois D1.

10. Extrudeuse (100) selon l'une des revendications précédentes, **caractérisée en ce que** la longueur de la zone de dégazage (23) est égale à au moins 2,0 fois D2.

11. Extrudeuse (100) selon l'une des revendications précédentes, **caractérisée en ce que**, au niveau de la transition de la zone de dosage (21.2) à la portion initiale (23.1) et/ou de la transition de la zone finale (23.2) à la zone d'évacuation (25), la vis d'extrudeuse (20) comporte à chaque fois une zone de transition conique (22, 24) dans laquelle le filet de vis d'extrudeuse (31, 32, 33, 34, 35) est interrompue.

12. Extrudeuse (100) selon l'une des revendications précédentes, **caractérisée en ce qu'**au moins dans la zone de dégazage (23) au moins deux filets de vis d'extrudeuse (32, 33, 34) entrelacés de même pas sont formés sur la vis d'extrudeuse (20).
